# EUROPÄISCHE PATENTSCHRIFT

(11) **EP 4 018 167 B1**
(45) Veröffentlichungstag und Bekanntmachung des Hinweises auf die Patenterteilung: **31.07.2024**
(21) Anmeldenummer: 20754186.3
(22) Anmeldetag: 03.08.2020
(51) Int. Cl.: G01F 1/84, G01F 15/00, G01N 9/00

(54) **MESSROHR EINES CORIOLIS-MESSAUFNEHMERS, CORIOLIS-MESSAUFNEHMER UND CORIOLIS-MESSGERÄT**
MEASUREMENT TUBE OF A CORIOLIS SENSING ELEMENT, CORIOLIS SENSING ELEMENT AND CORIOLIS METER
TUBE DE MESURE D'UN ÉLÉMENT DE DÉTECTION DE CORIOLIS, ÉLÉMENT DE DÉTECTION DE CORIOLIS ET DÉBITMÈTRE DE CORIOLIS

(30) Priorität: 19.08.2019 DE 102019122210
(43) Veröffentlichungstag der Anmeldung: 29.06.2022
(73) Patentinhaber: Endress + Hauser Flowtec AG, 4153 Reinach (CH)
(72) Erfinder: SCHWENTER, Benjamin, 4226 Breitenbach (CH)
(74) Vertreter: Hahn, Christian
(86) Internationale Anmeldenummer: PCT/EP2020/071812
(87) Internationale Veröffentlichungsnummer: WO 2021/032454

(56) Entgegenhaltungen:
- EP-A2- 1 113 248
- DE-A1- 102014 119 073
- DE-A1- 102015 120 087
- US-A1- 2006 169 038
- KEN A PETERSON ET AL: "SANDIA REPORT Macro-Meso-Microsystems Integration in LTCC: LDRD Report", 1 March 2007 (2007-03-01), pages 1 - 90, XP055360028, Retrieved from the Internet <URL:http://prod.sandia.gov/techlib/access-control.cgi/2007/071871.pdf> [retrieved on 20170329]

## Beschreibung

Die Erfindung betrifft ein Messrohr eines Coriolis-Messaufnehmers, einen solchen Coriolis-Messaufnehmer sowie ein solches Coriolis-Messgerät.

Coriolis-Messgeräte wie beispielsweise in der DE102015120087A1 gezeigt, weisen Messrohre auf, durch welche ein Medium strömt, dessen Dichte bzw. Massedurchfluss gemessen werden soll. Solche Messgeräte weisen Erreger zum Erzeugen von Messrohrschwingungen und Sensoren zum Erfassen von Messrohrschwingungen auf, wobei aus Schwingungseigenschaften Messwerte für Dichte und Massedurchfluss hergeleitet werden können. Diese Sensoren und Erreger umfassen elektrische/magnetische bzw. elektronische Bauteile, in vielen Fällen Spulen und Magnete, welche an Messrohren befestigt sind und dazu eingerichtet sind, gegeneinander zu schwingen. Beispielsweise können Spulen in LTCC-Keramiken eingearbeitet sein. Jedoch stören solche Bauteile das Schwingungsverhalten von Messrohren, insbesondere bei kleinen Messrohren.

Aufgabe der Erfindung ist es daher, ein Messrohr sowie ein Coriolis-Messaufnehmer sowie ein Coriolis-Messgerät vorzuschlagen, bei welchen der Einfluss von Sensor- bzw. Erregerbauteilen auf Messrohrschwingungen stark reduziert ist.

Die Aufgabe wird gelöst durch ein Messrohr gemäß dem unabhängigen Anspruch 1, durch einen Coriolis-Messaufnehmer gemäß Anspruch 7 sowie durch ein Coriolis-Messgerät gemäß Anspruch 8.

Bei einem erfindungsgemäßen Messrohr eines Coriolis-Messgeräts zum Messen einer Dichte bzw. eines Massedurchflusses eines durch das Messrohr strömenden Mediums mit einer Messrohrwandung und einem Messrohrlumen weist die Messrohrwandung eine gesinterte Keramik auf bzw. ist aus einer gesinterten Keramik gefertigt.

Zudem ist die Keramik eine LTCC-Keramik und umfasst zumindest ein elektrisches oder elektronisches Bauteil, wobei das Bauteil eine
Spule ist.

Die Spule kann beispielsweise Bestandteil eines Erregers oder Sensors sein. Bei einer Spule als Erregerbestandteil wird die Spule mit einem elektrischen Strom zwecks Bildung eines Magnetfelds beaufschlagt und kann mittels eines weiteren Magnetfelds zur Anregung von Messrohrschwingungen veranlasst werden. Bei einer Spule als Sensorbestandteil wird die Spule durch Messrohrschwingungen relativ zu einem Magnetfeld bewegt und somit messbare elektrische Spannungen induziert, welche für eine Auswertung von Messrohrschwingungen verwendet werden können.

Auch Temperatursensoren zwecks Bestimmung einer Medien- oder Messrohrtemperatur können in die Messrohrwand intergiert sein.

Vorteilhafterweise sind elektrische Anschlüsse zur elektrischen Verbindung der weiteren in das Messrohr integrierten Bauteile vorgesehen, welche in einem Bereich geringer Schwingungsamplitude der Messrohrschwingungen angeordnet sind. Auf diese Weise sind Verbindungen zwischen elektrischen Anschlüssen und elektrischen Verbindungen, beispielsweise Verbindungskabeln geringen mechanischen Belastungen ausgesetzt. Die in das Messrohr integrierten Bauteile sind dabei mit in das Messrohr integrierten Leiterbahnen elektrisch verbunden.

Das Bauteil ist auf eine Messrohraußenfläche aufgebracht und/oder in die Messrohrwandung integriert und vom Lumen durch die Messrohrwandung getrennt.

Die Spule weist mehrere Teilabschnitte und benachbarte Teilabschnitte verbindende Verbindungsstücke auf, wobei die Teilabschnitte bzgl. einer Spulenachse versetzt angeordnet sind und durch LTCC-Keramik voneinander getrennt sind, wobei Teilabschnitte als Schichten auf oder in der Messrohrwandung ausgebildet sind.

In einer Ausgestaltung folgt ein Querschnitt einer Außenfläche der Messrohrwandung und/oder ein Querschnitt einer das Lumen begrenzenden Innenfläche der Messrohrwandung einer der folgenden geometrischen Formen: Kreis, Ellipse, Vieleck mit mehr als drei Ecken beispielsweise ein Rechteck oder ein Quadrat.

In einer Ausgestaltung ist die Spule aus einer Metall-Mikropartikelpaste gefertigt, wobei das Metall insbesondere Silber und/oder Gold ist.

In einer Ausgestaltung weist die LTCC-Keramik beispielsweise zumindest eines der folgenden Materialien auf: DuPont 948, DuPont 951, Ferro A6, Heraeus CT700, Heraeus CT800, Heraeus CT2000.

In einer Ausgestaltung ist eine Querschnittsfläche des Lumens kleiner als 5 Quadratmillimeter, und insbesondere kleiner als 3 Quadratmillimeter und bevorzugt kleiner als 2 Quadratmillimeter.

In einer Ausgestaltung weist die Spule jeweils zwei Anschlüsse zum Anschließen von elektrischen Verbindungsleitungen auf.

Ein erfindungsgemäßer Coriolis-Messaufnehmer eines Coriolis-Messgeräts zum Messen einer Dichte bzw. eines Massedurchflusses eines durch ein Messrohr strömenden Mediums umfasst:
mindestens ein erfindungsgemäßes Messrohr,
mindestens einen Erreger zum Erzeugen von Messrohrschwingungen,
mindestens zwei Sensoren zum Erfassen von Messrohrschwingungen,
einen Trägerkörper zum Tragen des Messrohrs,
wobei ein Bauteil des Erregers und/oder jeweils mindestens ein Bauteil des Sensors Bestandteil des Messrohrs ist.

Ein erfindungsgemäßes Coriolis-Messgerät zum Messen einer Dichte bzw. eines Massedurchflusses eines durch ein Messrohr strömenden Mediums umfasst:
einen erfindungsgemäßen Coriolis-Messaufnehmer,
eine elektronische Mess-/Betriebsschaltung eingerichtet zum Betreiben des Erregers sowie eingerichtet zum Bereitstellen von Messwerten der Dichte und/oder des Massedurchflusses auf Basis der durch die Sensoren erfassten
Messrohrschwingungen,
ein Elektronikgehäuse, in welchem die elektronische Mess-/Betriebsschaltung angeordnet ist.

Im Folgenden wird die Erfindung anhand von Ausführungsbeispielen beschrieben.
Fig. 1 beschreibt einen Aufbau eines beispielhaften Coriolis-Messgeräts mit einem beispielhaften Coriolis-Messaufnehmer;
Fig. 2 zeigt ein beispielhaftes erfindungsgemäßes Messrohr für ein Coriolis-Messgerät;
Fig. 3 skizziert schematisch die Anordnung einer Spule in einer Messrohrwandung.

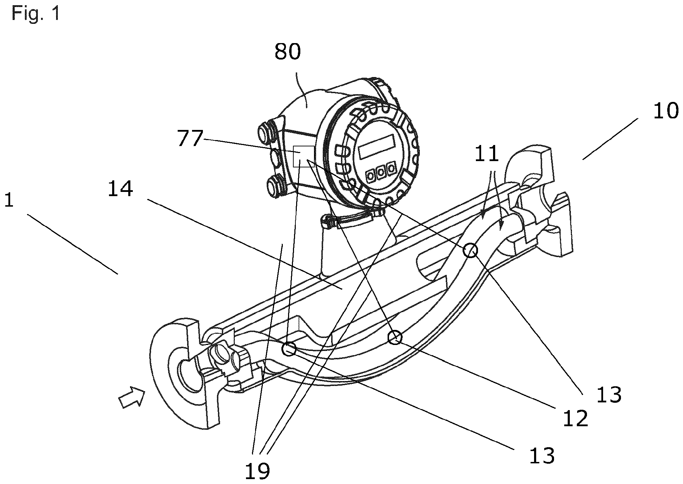

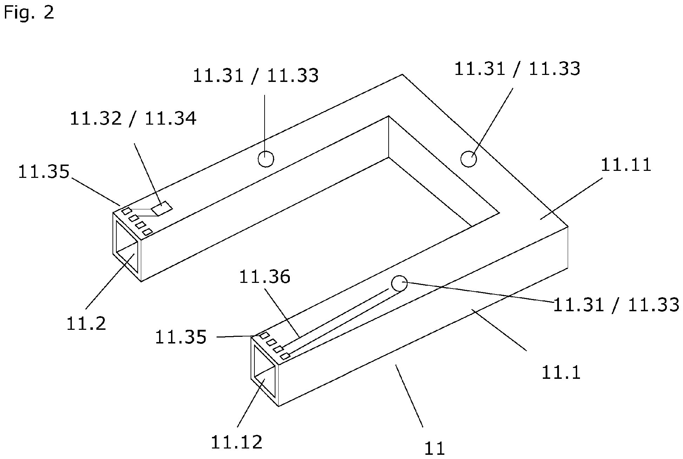

Fig. 1 skizziert den Aufbau eines beispielhaften schematischen Coriolis-Messgeräts 1 mit einem beispielhaften erfindungsgemäßen Coriolis-Messaufnehmer 2, wobei der Coriolis-Messaufnehmer ein Schwingungssystem mit zwei Messrohren 11 mit jeweils einem Einlauf und einem Auslauf, einen Trägerkörper 14 zum Tragen der Messrohre, einen Erreger 12, und zwei Sensoren 13 aufweist. Der Erreger ist dazu eingerichtet, die beiden Messrohre senkrecht zu einer jeweils durch die bogenförmig ausgestalteten Messrohre definierten Messrohrebene zum Schwingen anzuregen. Die Sensoren sind dazu eingerichtet, die den Messrohren aufgeprägte Schwingung zu erfassen. Der Coriolis-Messaufnehmer ist mit einem Elektronikgehäuse 80 des Coriolis-Messgeräts verbunden, welches dazu eingerichtet ist, eine elektronische Mess-/Betriebsschaltung 77 zu behausen, welche Mess-/Betriebsschaltung dazu eingerichtet ist, den Erreger sowie die Sensoren zu betrieben und auf Basis von mittels der Sensoren gemessenen Schwingungseigenschaften des Messrohrs Durchflussmesswerte und/oder Dichtemesswerte zu ermitteln und bereitzustellen. Der Erreger sowie die Sensoren sind mittels elektrischer Verbindungen 19 mit der elektronischen Mess-/Betriebsschaltung verbunden. Die elektrischen Verbindungen 19 können jeweils durch Kabelführungen zusammengefasst sein. Die in Fig. 1 gezeigten Messrohre sind beispielhaft und nicht erfindungsgemäß und dienen rein der Darstellung eines Coriolis-Messgeräts. Erfindungsgemäße Messrohre sind in Fig. 2 gezeigt. Es stellt für den Fachmann kein Problem dar, die in Fig. 1 gezeigten Messrohre mit den in Fig. 2 gezeigten Messrohren auszutauschen und gegebenenfalls den Trägerkörper sowie Anbindungen an ein Rohrleitungssystem anzupassen.

Fig. 2 skizziert ein beispielhaftes erfindungsgemäßes Messrohr 11, welches eine Messrohrwandung 11.1 und ein Messrohrlumen 11.2 aufweist, wobei die Messrohrwandung eine gesinterte Keramik aufweist bzw. aus einer gesinterten Keramik gefertigt ist. Gesinterte Messrohre weisen den Vorteil auf, dass eine Messrohrgeometrie vielfältig ausgestaltet werden kann. Ein Querschnitt einer Messrohraußenfläche 11.11 der Messrohrwandung und ein Querschnitt einer das Messrohrlumen begrenzenden Messrohrinnenfläche 11.12 der Messrohrwandung kann dabei wie hier gargestellt rechteckig sein. Die Querschnitte können jedoch auch jeweils beispielweise einer der folgenden geometrischen Formen folgen: Kreis, Ellipse, Vieleck mit mehr als drei Ecken wie beispielsweise ein Quadrat. Entlang einer Messrohrmittenlinie können solche Querschnitte auch variierend ausgestaltet sein, um beispielsweise eine Strömung des Mediums im Messrohr oder Schwingungseigenschaften des Messrohrs vorteilhaft auszugestalten. Grünkörper, also Sinterausgangskörper, können dabei beispielsweise mittels 3D-Druck oder durch Übereinanderstapeln und Verpressen mehrerer Folien eines Ausgangsmaterials hergestellt werden. Typische Grünkörper umfassen dabei zumindest eines der folgenden Materialien: DuPont 948, DuPont 951, Ferro A6, Heraeus CT700, Heraeus CT800, Heraeus CT2000, wobei diese Materialien beispielsweise Al₂O₃, CaAl₂Si₂O₈ oder TiO₂ aufweisen.

Vorteilhaft ist eine Messrohrherstellung mittels Sinterns einer Keramik bei Messrohren, bei welchen eine Querschnittsfläche des Messrohrlumens kleiner ist als 5 Quadratmillimeter, und insbesondere kleiner als 3 Quadratmillimeter und bevorzugt kleiner als 2 Quadratmillimeter. Solche Messrohre lassen sich mit anderen Verfahren nur auf eine teurere und kompliziertere Art und Weise fertigen und erlauben weniger Freiheit bei der Wahl der geometrischen Ausgestaltung von Messrohren.

Erfindungsgemäß ist die Keramik als eine LTCC-Keramik ausgebildet und umfaßt die Keramik, wie in Fig. 2 gezeigt, zumindest ein elektrisches oder elektronisches Bauteil 11.3 , wobei das Bauteil eine Spule 11.31 ist.

Die Spule kann beispielsweise Bestandteil eines Erregers oder Sensors sein. Bei einer Spule als Erregerbestandteil wird die Spule mit einem elektrischen Strom zwecks Bildung eines Magnetfelds beaufschlagt und kann mittels eines weiteren Magnetfelds zur Anregung von Messrohrschwingungen veranlasst werden. Bei einer Spule als Sensorbestandteil wird die Spule durch Messrohrschwingungen relativ zu einem Magnetfeld bewegt und somit messbare elektrische Spannungen induziert, welche für eine Auswertung von Messrohrschwingungen verwendet werden können.

Auch Temperatursensoren zwecks Bestimmung einer Medien- oder Messrohrtemperatur können in die Messrohrwand intergiert sein.

Vorteilhafterweise sind elektrische Anschlüsse zur elektrischen Verbindung der weiteren in das Messrohr integrierten Bauteile vorgesehen, welche beispielsweise in einem Bereich geringer Schwingungsamplitude der Messrohrschwingungen angeordnet sind. Auf diese Weise sind Verbindungen zwischen elektrischen Anschlüssen und elektrischen Verbindungen, beispielsweise Verbindungskabeln geringen mechanischen Belastungen ausgesetzt. Die in das Messrohr integrierten Bauteile sind dabei mit in das Messrohr integrierten Leiterbahnen 11.16 elektrisch verbunden, wobei die Leiterbahnen auf der Messrohraußenfläche 11.11 oder in der Messrohrwandung verlaufen können. Der Fachmann wählt Anzahl und Anordnung solcher elektrischen Anschlüsse gemäß seinen Vorstellungen und ist nicht auf die in Fig. 2 gezeigte Ausgestaltung mit 2 mal 4 elektrischen Anschlüssen beschränkt.

Die elektronischen Bauteile bzw. die Spulen 11.31 sind jeweils mittels einer Metall-Mikropartikelpaste gefertigt, wobei die Metall-Mikropartikelpaste insbesondere Silber und/oder Gold umfasst. Handelsüblich sind dabei Au5062D, Au5063D sowie Ag 5081, oder Ag5082. Die Mikropartikelpaste ist dabei auf eine der Messrohraußenfläche entsprechenden Fläche des Grünlings aufgetragen oder während der Fertigung des Grünlings in einen der Messrohrwandung entsprechenden Bereich des Grünlings integriert. Beispielsweise kann die Mikropartikelpaste vor Verpressen auf Folien aufgebracht werden. Das Sintern findet nach Fertigstellung des Grünlings statt.

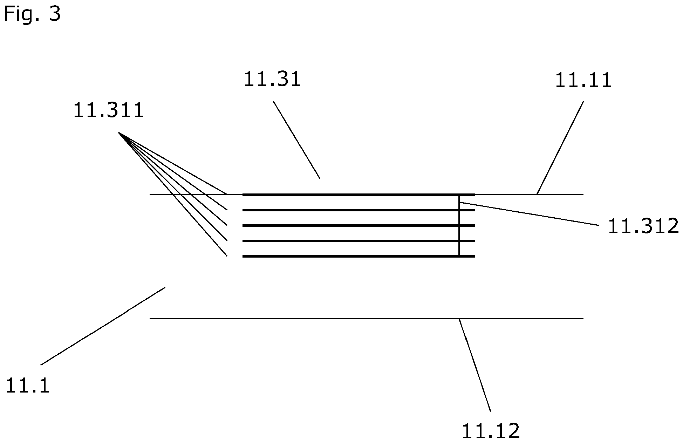

Eine Spule können dabei nur auf der Messrohraußenfläche 11.11 aufgebracht oder auch zumindest teilweise wie in Fig. 3 skizziert in die Messrohrwandung 11.1 integriert sein.

Ein Coriolis-Messaufnehmer bzw. ein Coriolis-Messgerät kann dabei nur ein erfindungsgemäßes Messrohr oder auch mehrere solcher Messrohre aufweisen. Bei Vorliegen mehrerer Messrohre können beispielsweise zwei Messrohre dazu eingerichtet sein, gegeneinander zu schwingen. In diesem Fall können elektrische Bauteile verschiedener Messrohre eines solchen Messrohrpaars gemeinsam einen Erreger oder einen Sensor, beispielsweise jeweils umfassend zwei Kondensatorplatten oder zwei Spulen, ausbilden. Die elektronische Mess-/Betriebsschaltung ist dann dazu eingerichtet, die elektronischen Bauteile entsprechend anzusteuern, bzw. elektrische Ströme und/oder elektrische Spannungen entsprechend auszulesen und auszuwerten.

Fig. 3 skizziert eine Anordnung einer Spule 11.31, welche teilweise in die Messrohrwandung 11.1 integriert ist, wobei die Spule mehrere Teilabschnitte 11.311 und Verbindungsstücke 11.312 zwecks elektrischer Verbindung von benachbarten Verbindungsstücken aufweist. Die Anordnung der Verbindungsstücke ist hierbei rein schematisch, ein Fachmann wird Verbindungsstücke und Teilabschnitte gemäß seinen Vorstellungen einrichten. Ein Teilabschnitt kann wie hier gezeigt auf der Messrohraußenfläche 11.11 aufgebracht sein. Es können aber auch sämtliche Teilabschnitte in die Messrohrwandung integriert sein.

### Bezugszeichenliste

- 1: Coriolis-Messgerät
- 10: Coriolis-Messaufnehmer
- 11: Messrohr
- 11.1: Messrohrwandung
- 11.11: Messrohraußenfläche
- 11.12: Messrohrinnenfläche
- 11.2: Messrohrlumen
- 11.3: elektronisches Bauteil
- 11.31: Spule
- 11.311: Teilabschnitt
- 11.312: Verbindungsstück
- 11.32: Temperatursensor
- 11.33: Kondensatorplatte
- 11.34: Dehnungssensor
- 11.35: elektrischer Anschluss
- 11.36: elektrische Leiterbahn
- 12: Erreger
- 13: Sensor
- 14: Trägerkörper
- 77: elektronische Mess-/Betriebsschaltung
- 80: Elektronikgehäuse

## Patentansprüche

1. Messrohr (1) eines Coriolis-Messaufnehmers (10) zum Messen einer Dichte bzw. eines Massedurchflusses eines durch ein Messrohr strömenden Mediums,
wobei das Messrohr (11) eine Messrohrwandung (11.1) und ein Messrohrlumen (11.2) aufweist,
wobei die Messrohrwandung aus einer gesinterten Keramik gefertigt ist,
wobei die Keramik eine LTCC-Keramik ist und zumindest ein elektrisches oder elektronisches Bauteil (11.3) umfasst, welches Bauteil auf eine Messrohraußenfläche (11.11) aufgebracht und/oder in die Messrohrwandung integriert ist und welches Bauteil vom Messrohrlumen durch die Messrohrwandung getrennt ist,
wobei das Bauteil eine Spule (11.31) ist, die mehrere Teilabschnitte (11.311) und benachbarte Teilabschnitte verbindende Verbindungsstücke (11.312) aufweist,
wobei die Teilabschnitte bzgl. einer Spulenachse versetzt angeordnet und durch LTCC-Keramik voneinander getrennt sind,
und wobei Teilabschnitte als Schichten auf oder in der Messrohrwandung ausgebildet sind.

2. Messrohr nach Anspruch 1, wobei ein Querschnitt einer Messrohraußenfläche (11.11) der Messrohrwandung und/oder ein Querschnitt einer das Messrohrlumen begrenzenden Messrohrinnenfläche (11.12) der Messrohrwandung einer der folgenden geometrischen Formen folgt: Kreis, Ellipse, Vieleck mit mehr als drei Ecken, insb. ein Rechteck oder ein Quadrat.

3. Messrohr nach einem der vorigen Ansprüche, wobei das elektronische Bauteil aus einer Metall-Mikropartikelpaste gefertigt ist, wobei das Metall insbesondere Silber und/oder Gold ist.

4. Messrohr nach einem der vorigen Ansprüche, wobei die LTCC-Keramik zumindest eines der folgenden Materialien aufweist: DuPont 948, DuPont 951, Ferro A6, Heraeus CT700, Heraeus CT800, Heraeus CT2000.

5. Messrohr nach einem der vorigen Ansprüche, wobei eine Querschnittsfläche des Messrohrlumens (11.2) kleiner ist als 5 Quadratmillimeter, und insbesondere kleiner als 3 Quadratmillimeter und bevorzugt kleiner als 2 Quadratmillimeter.

6. Messrohr nach einem der vorigen Ansprüche, wobei das Bauteil jeweils mit zwei elektrischen Anschlüssen (11.35) zum Anschließen von elektrischen Verbindungsleitungen verbunden ist.

7. Coriolis-Messaufnehmer (10) eines Coriolis-Messgeräts (1) zum Messen einer Dichte bzw. eines Massedurchflusses eines durch ein Messrohr strömenden Mediums umfassend:
mindestens ein Messrohr (11) nach einem der vorigen Ansprüche,
mindestens einen Erreger (12) zum Erzeugen von Messrohrschwingungen,
mindestens zwei Sensoren (13) zum Erfassen von Messrohrschwingungen,
einen Trägerkörper (14) zum Tragen des Messrohrs,
wobei mindestens ein Bauteil des Erregers und/oder jeweils mindestens ein Bauteil des Sensors Bestandteil des Messrohrs (11) ist.

8. Coriolis-Messgerät (1) zum Messen einer Dichte bzw. eines Massedurchflusses eines durch ein Messrohr strömenden Mediums umfassend:
einen Coriolis-Messaufnehmer (10) nach dem vorigen Anspruch,
eine elektronische Mess-/Betriebsschaltung (77) eingerichtet zum Betreiben des Erregers sowie eingerichtet zum Bereitstellen von Messwerten der Dichte und/oder des Massedurchflusses auf Basis der durch die Sensoren erfassten Messrohrschwingungen,
ein Elektronikgehäuse (80), in welchem die elektronische Mess-/Betriebsschaltung angeordnet ist.

## Claims

1. A measuring tube (1) of a Coriolis measuring transducer (10) for measuring a density and/or a mass flow of a medium flowing through a measuring tube,
wherein the measuring tube (11) has a measuring tube wall (11.1) and a measuring tube lumen (11.2),
wherein the measuring tube wall is made from sintered ceramics,
wherein the ceramics are low-temperature co-fired ceramics (LTCCs) and comprise at least one electrical or electronic component (11.3), said component being mounted a measuring tube outer surface (11.11) and/or integrated into the measuring tube wall and being separated from the measuring tube lumen by the measuring tube wall,
wherein the component has a coil (11.31) which features multiple partial sections (11.311) and connectors which join adjacent partial sections (11.312) together,
wherein the partial sections are arranged offset relative to a coil axis and are separated from each other by LTCCs,
and wherein partial sections are formed as layers on or in the measuring tube wall.

2. The measuring tube as claimed in claim 1, wherein a cross section of a measuring tube outer surface (11.11) of the measuring tube wall and/or a cross section of a measuring tube inner surface (11.12) of the measuring tube wall surrounding the measuring tube lumen takes/take one of the following geometric shapes: Circle, ellipsis, multi-sided shape with more than three corners, in particular a rectangle or a square.

3. The measuring tube as claimed in one of the preceding claims, wherein the electronic component is made from a metal microparticle paste, wherein the metal is in particular silver and/or gold.

4. The measuring tube as claimed in one of the preceding claims, wherein the LTCCs have at least one of the following materials: DuPont 948, DuPont 951, Ferro A6, Heraeus CT700, Heraeus CTS00, Heraeus CT2000.

5. The measuring tube as claimed in one of the preceding claims, wherein a cross-sectional area of the measuring tube lumen (11.2) is smaller than 5 square millimeters, and in particular smaller than 3 square millimeters, and preferably smaller than 2 square millimeters.

6. The measuring tube as claimed in one of the preceding claims, wherein the component is connected to two electrical connections (11.35) for connecting electrical connecting cables.

7. A Coriolis measuring transducer (10) of a Coriolis measuring device (1) for measuring a density and/or a mass flow of a medium flowing through a measuring tube, comprising:
At least one measuring tube (11) as claimed in one of the preceding claims,
at least one exciter (12) for generating measuring tube vibrations,
at least two sensors (13) for detecting measuring tube vibrations,
a support body (14) for mounting the measuring tube,
wherein at least one component of the exciter and/or at least one component of the sensor is a constituent part of the measuring tube (11).

8. A Coriolis measuring device (1) for measuring a density and/or a mass flow of a medium flowing through a measuring tube, comprising:
A Coriolis measuring transducer (10) as claimed in the preceding claim,
an electronic measuring/operating circuit (77) configured to operate the exciter and
configured to supply measured values relating to the density and/or the mass flow based on the measuring tube vibrations detected by the sensors,
an electronics enclosure (80) in which the electronic measuring/operating circuit is arranged.

## Revendications

1. Tube de mesure (1) d'un débitmètre Coriolis (10) destiné à la mesure d'une densité ou d'un débit massique d'un produit s'écoulant à travers un tube de mesure,
le tube de mesure (11) présentant une paroi de tube de mesure (11.1) et un canal intérieur de tube de mesure (11.2),
la paroi de tube de mesure étant fabriquée à partir d'une céramique frittée,
la céramique étant une céramique LTCC et comprenant au moins un composant électrique ou électronique (11.3), lequel composant est appliqué sur une surface extérieure du tube de mesure (11.11) et/ou intégré dans la paroi de tube de mesure et lequel composant est séparé du canal intérieur du tube de mesure par la paroi de tube de mesure,
le composant étant une bobine (11.31), laquelle présente plusieurs sections partielles (11.311) et des pièces de liaison (11.312) reliant des sections partielles voisines,
les sections partielles étant disposées de manière décalée par rapport à un axe de bobine et étant séparées les unes des autres par une céramique LTCC,
et les sections partielles étant réalisées sous forme de couches sur ou dans la paroi de tube de mesure.

2. Tube de mesure selon la revendication 1,
pour lequel une section transversale d'une surface extérieure de tube de mesure (11.11) de la paroi de tube de mesure et/ou une section transversale d'une surface intérieure de tube de mesure (11.12) de la paroi de tube de mesure délimitant le canal intérieur du tube de mesure suit l'une des formes géométriques suivantes : cercle, ellipse, polygone avec plus de trois coins, notamment un rectangle ou un carré.

3. Tube de mesure selon l'une des revendications précédentes, pour lequel le composant électronique est fabriqué à partir d'une pâte de microparticules métalliques, le métal étant notamment de l'argent et/ou de l'or.

4. Tube de mesure selon l'une des revendications précédentes, pour lequel la céramique LTCC comprend au moins l'un des matériaux suivants : DuPont 948, DuPont 951, Ferro A6, Heraeus CT 700, Heraeus CT800, Heraeus CT2000.

5. Tube de mesure selon l'une des revendications précédentes, pour lequel une surface de section transversale du canal intérieur du tube de mesure (11.2) est inférieure à 5 millimètres carrés, et notamment inférieure à 3 millimètres carrés et de préférence inférieure à 2 millimètres carrés.

6. Tube de mesure selon l'une des revendications précédentes, pour lequel le composant est relié respectivement à deux connexions électriques (11.35) destinées à raccorder des lignes de connexion électriques.

7. Débitmètre Coriolis (10) d'un appareil de mesure à effet Coriolis (1) destiné à la mesure d'une densité ou d'un débit massique d'un produit s'écoulant à travers un tube de mesure, lequel débitmètre comprend :
au moins un tube de mesure (11) selon l'une des revendications précédentes,
au moins un excitateur (12) destiné à générer les vibrations du tube de mesure,
au moins deux capteurs (13) destinés à mesurer les vibrations du tube de mesure,
un corps de support (14) destiné à supporter le tube de mesure,
au moins un composant de l'excitateur et/ou au moins un composant de chaque capteur faisant partie intégrante du tube de mesure (11).

8. Appareil de mesure à effet Coriolis (1) destiné à la mesure d'une densité ou d'un débit massique d'un produit s'écoulant à travers un tube de mesure, lequel appareil comprend :
un débitmètre Coriolis (10) selon la revendication précédente,
un circuit électronique de mesure / fonctionnement (77), lequel est conçu pour faire fonctionner l'excitateur et pour fournir des valeurs mesurées de densité et/ou de débit massique sur la base des vibrations du tube de mesure mesurées par les capteurs,
un boîtier électronique (80), dans lequel le circuit électronique de mesure / fonctionnement est disposé.
